# FASCICULE DE BREVET EUROPEEN

(11) **EP 2 630 445 B1**
(45) Date de publication et mention de la délivrance du brevet: **21.03.2018**
(21) Numéro de dépôt: 11785087.5
(22) Date de dépôt: 19.10.2011
(51) Int. Cl.: G01C 21/36

(54) **SYSTEME ET PROCEDE DE CARTOGRAPHIE AVEC REPRESENTATION DE MANOEUVRES**
KARTOGRAFIESYSTEM UND VERFAHREN MIT DARSTELLUNG VON MANÖVERS
CARTOGRAPHY SYSTEM AND METHOD WITH REPRESENTATION OF MANOEUVRES

(30) Priorité: 21.10.2010 FR 1004166
(43) Date de publication de la demande: 28.08.2013
(73) Titulaire: Michelin Travel Partner, 92100 Boulogne-Billancourt (FR)
(72) Inventeur: HAYOT, Pierre, F-63040 Clermont Ferrand cedex 9 (FR)
(74) Mandataire: Bauvir, Jacques
(86) Numéro de dépôt international: PCT/IB2011/002498
(87) Numéro de publication internationale: WO 2012/052826

(56) Documents cités:
- EP-A1- 1 229 305
- US-A- 5 808 566
- US-A1- 2008 195 307
- US-B1- 6 199 014

## Description

### DOMAINE TECHNIQUE DE L'INVENTION

La présente invention concerne un procédé et un système de génération automatique de cartes d'itinéraires. Elle concerne plus particulièrement un procédé permettant de générer des cartes d'itinéraires complètes et exhaustives, utilisant un espace mémoire restreint.

### ETAT DE LA TECHNIQUE ANTERIEURE

Les dispositifs, procédé et système de préparation de cartes d'itinéraires sont bien connus et sont même devenus des outils d'usage courant pour un nombre considérablement important d'usagers de la route.

Par exemple, le document WO2006/042688 décrit un procédé de génération d'itinéraires indiquant, en plus d'un itinéraire optimal entre deux points donnés, les points de voisinage le long de cet itinéraire. Outre la présence des points de voisinage, qui permettent de faciliter le suivi de l'itinéraire grâce au repérage de points faciles à visualiser le long du tracé, ce document décrit un mode de présentation classique des itinéraires préparés avant le départ, à savoir une impression sur une ou plusieurs pages comportant des instructions écrites, et une ou plusieurs pages comportant des cartes routières sur lesquelles l'itinéraire établi est mis en évidence, par exemple par surlignage. Bien que ce type d'outil soit utile pour la préparation d'un déplacement, en permettant au conducteur de prendre connaissance de façon globale du parcours à venir, plusieurs inconvénients sont à noter lors de la phase de suivi de l'itinéraire sur la route. Pour un conducteur ou pour un passager agissant en tant que copilote, la manipulation de plusieurs pages pour un même secteur d'itinéraire est peu pratique. Par ailleurs, la lecture et la compréhension des instructions détaillées, sans relation précise avec la carte de l'itinéraire à effectuer, peuvent parfois être fastidieuses. Enfin, des détails visuels précis sur les manoeuvres à effecteur sont en général absents, causant parfois des risques d'erreur dans l'interprétation des instructions. Enfin, si un tel itinéraire, avec format cartographique complet doit être sauvegardé ou transmis à un dispositif portable, la capacité mémoire requise est relativement importante, ce qui peut restreindre la liste des appareils compatibles.

Le document FR 2 796 746 décrit un système d'affichage d'un itinéraire comportant des moyens de génération d'informations de carte de région limitée en forme d'une bande s'étendant le long d'un itinéraire. La largeur de la bande est adaptée en fonction de la capacité de mémorisation d'information du dispositif. Un tel dispositif ne permet cependant pas d'optimiser le format de la carte puisqu'il s'agit uniquement de procéder à une extraction de données en conservant le format initial. Par ailleurs, aucune explication ou instruction n'est fournie pour faciliter le suivi de cet itinéraire.

Le document US2006/0271277 décrit une carte de planification de voyage ou d'itinéraire comprenant l'affichage d'un itinéraire et d'éléments complémentaires à cet itinéraire, tels que des informations concernant les hôtels, les restaurants, les sites touristiques, etc. Ces données complémentaires sont intéressantes pour assurer le confort et l'agrément des passagers du véhicule, mais ne permettent pas de faciliter le suivi de l'itinéraire en tant que tel.

Le document US 6,199,014 B1 décrit un procédé de génération automatique de cartes d'itinéraires qui affiche successivement des représentations schématiques de manoeuvres à effectuer et des instructions écrites correspondant à ces manoeuvres.

Le document US 2008/0195307 A1 décrit un procédé de génération automatique de cartes d'itinéraires qui affiche côte à côte des représentations schématiques de manoeuvres à effectuer et des instructions écrites correspondant à ces manoeuvres.

Ainsi, de manière générale, les procédés existants sont peu ergonomiques et sont généralement gourmands en capacité mémoire.

Pour pallier ces différents inconvénients, l'invention prévoit différents moyens techniques.

### EXPOSE DE L'INVENTION

Tout d'abord, un premier objet de l'invention consiste à prévoir un procédé de génération de cartes d'itinéraires permettant de générer des cartes d'itinéraires occupant un espace mémoire réduit ou minimalisé.

Un autre objet de l'invention consiste à prévoir un procédé de génération de cartes d'itinéraires avec une ergonomie optimisée, facilitant la compréhension et l'utilisation, en toute sécurité.

Encore un autre objet de l'invention consiste à prévoir un système de génération de cartes d'itinéraires occupant une surface minimale, mais sans affecter la clarté ou la qualité générale des données contenues.

Pour ce faire, l'invention prévoit un procédé de génération automatique de cartes d'itinéraires selon la revendication 1 annexée.

Grâce à ce procédé, on formate les données cartographiques de façon à ce que les tronçons correspondant sensiblement au parcours permettant de suivre une instruction soient agencés axialement sensiblement vis-à-vis ladite instruction. Une telle mise en oeuvre permet des gains de place substantiels en évitant d'utiliser de la surface utile pour afficher des données non indispensables, voire peu ou pas utiles pour suivre l'itinéraire. L'utilisation d'une représentation schématique utilisant quelques tronçons clés, plutôt qu'un jeu de cartes de la zone couverte par l'itinéraire et des parties de cette zone, permet de réduire de façon considérable la capacité mémoire requise pour stocker et/ou utiliser les cartes produites. Ainsi, un plus grand nombre de dispositifs sont susceptibles de pouvoir afficher les cartes générées par le procédé.

Le procédé confère une très grande souplesse pour l'agencement, notamment l'orientation des manoeuvres. La lecture et la compréhension de l'itinéraire sont grandement facilitées. Les représentations cartographiques obtenues selon le procédé permettent de représenter schématiquement les manoeuvres successives à différents niveaux de grossissement et avec un alignement général le long de l'axe d'orientation.

De manière avantageuse, l'étape de repérage axial permettant d'aligner la représentation schématique associée est avantageusement réalisée par une mesure de l'espacement axial requis pour le positionnement de l'instruction sur le support.

La représentation schématique comporte uniquement les tronçons identifiés pour la réalisation de l'itinéraire. L'extraction de l'itinéraire du reste des éléments cartographiques confère une liberté totale de représentation des segments, tant du point de vue dimensionnel qu'angulaire.

Selon un mode de réalisation avantageux, le formatage de la représentation schématique comporte une étape de transformation permettant de modifier au moins une des caractéristiques d'agencement d'au moins une partie des tronçons en fonction d'une part, des positions axiales des instructions et d'autre part, de la surface disponible pour la représentation schématique.

Les caractéristiques d'agencement des tronçons comprennent avantageusement :
- les angles de positionnement des tronçons les uns par rapport aux autres ;
- les profils des tronçons ;
- les longueurs relatives des tronçons.

Le fait de modifier l'agencement relatif des tronçons, leur longueur et/ou leur position angulaire, et ainsi d'obtenir une représentation transformée et adaptée de l'itinéraire, n'affecte pas d'autres éléments comme si l'itinéraire était intégré à une carte. Pour l'utilisateur, qui ne cherche pas une représentation fidèle de la réalité physique, mais plutôt un guide directionnel facile à interpréter, ces modifications d'échelle, de forme et/ou d'angle n'engendrent que peu ou pas d'inconvénients. En outre, ces modifications sont peu perceptibles depuis le véhicule lors du suivi de l'itinéraire.

Dans une variante, la représentation schématique comporte en plus des tronçons directement connectés à ceux de l'itinéraire prévu. Les tronçons connectés concernés sont de préférence ceux où des manoeuvres sont prévues et ceux précédant une manoeuvre de type croisement avec passage à niveau.

Selon une autre variante, chaque section comporte en plus une portion d'itinéraire sans manoeuvre à effectuer. Cette portion se prolonge de préférence sensiblement jusqu'à la manoeuvre suivante. Grâce au procédé selon l'invention, cette portion est dimensionnée en fonction de la surface disponible. Il n'est pas requis d'utiliser de surface supplémentaire, rendant inutilement longue la représentation de l'itinéraire.

Selon une autre variante, si ces opérations ne peuvent pas être effectuées de façon préalable ou par un dispositif externe, le procédé comprend les étapes pour détecter les manoeuvres permettant d'effectuer l'itinéraire et pour obtenir les données d'instructions correspondant aux manoeuvres à effectuer.

De manière avantageuse, le procédé comprend par ailleurs une étape d'agencement des tronçons de l'itinéraire de façon à procurer à la représentation schématique de l'itinéraire une orientation sensiblement selon l'axe d'orientation.

Selon un mode de réalisation avantageux, l'ensemble des points d'entrée et/ou de sortie comportent des positions angulaires voisines. Ceci permet d'améliorer l'ergonomie de la carte d'itinéraire, en offrant un format des manoeuvres le plus standard possible. La lisibilité de la carte s'en trouve grandement améliorée. Selon un exemple avantageux de ce mode de réalisation dans lequel les points d'entrée sont dans la portion inférieure du support d'affichage (ou d'impression), ce type de mise en oeuvre permet un affichage des données en correspondance avec une vue correspondant sensiblement au cap suivi par le véhicule, c'est-à-dire une vue dans laquelle l'axe du support est sensiblement aligné avec l'axe du véhicule.

Dans une autre variante, la distance à parcourir entre deux points d'instructions est intégrée schématiquement le long de l'axe d'orientation pour chaque portion d'itinéraire. L'axe d'orientation est avantageusement représenté entre les deux côtés du support, ou encore sur un des côtés, à gauche ou à droite du support.

Selon encore un mode de réalisation avantageux, les noeuds des ronds-points sont regroupés pour ne former qu'une seule manoeuvre, de sorte que dans les ronds-points, aucun découpage n'est effectué avant la sortie.

Selon encore une autre variante, aucun découpage n'est effectué entre les manoeuvres d'une même zone urbaine.

L'invention prévoit également un système de génération de cartes d'itinéraires pour la mise en oeuvre du procédé préalablement mentionné, selon la revendication 8 annexée.

Selon un mode de réalisation avantageux, le système de génération de cartes d'itinéraires comprend par ailleurs un module d'analyse du support d'affichage de carte, pour déterminer la surface disponible pour afficher la carte d'itinéraire.

Selon un autre mode de réalisation avantageux, le système de génération de cartes d'itinéraires comprend par ailleurs un module de transformation des tronçons, permettant de modifier au moins une des caractéristiques d'agencement d'au moins une partie des tronçons en fonction d'une part, des positions axiales des instructions et d'autre part, de la surface disponible pour la représentation schématique des tronçons.

Le système de génération de cartes d'itinéraires comprend par ailleurs :
- un module de détection de manoeuvre, pour détecter les manoeuvres à effectuer pour parcourir l'itinéraire ;
- un module de déterminations d'instructions, pour fournir les instructions correspondant à chacune des manoeuvres.

### DESCRIPTION DES FIGURES

Tous les détails de réalisation sont donnés dans la description qui suit, complétée par les figures 1 à 12, présentées uniquement à des fins d'exemples non limitatifs, et dans lesquelles :
- la figure 1 est une représentation schématique d'un système de génération de carte d'itinéraire selon l'invention ;
- les figures 2A et 2B sont des représentations schématiques complémentaires du système de la figure 1 ;
- la figure 3 est une autre représentation schématique d'un système de génération de carte d'itinéraire, montrant un environnement de travail délocalisé ;
- la figure 4 est un organigramme fonctionnel illustrant les principales étapes d'un procédé de génération de carte d'itinéraire selon l'invention ;
- les figures 5A, 5B et 5C sont des exemples de cartes d'itinéraire selon l'art antérieur ;
- la figure 6 illustre un exemple d'une étape intermédiaire du procédé selon l'invention ;
- la figure 7 présente un exemple de carte d'itinéraire générée à l'aide d'un procédé et d'un système de génération de carte d'itinéraire selon l'invention ;
- la figure 8 présente un autre exemple de carte d'itinéraire générée à l'aide d'un procédé et d'un système de génération de carte d'itinéraire selon l'invention ;
- la figure 9 présente un autre exemple de carte d'itinéraire générée à l'aide d'un procédé et d'un système de génération de carte d'itinéraire selon l'invention avec le sens de lecture des représentations schématiques du haut vers le bas du support ;
- la figure 10 présente un autre exemple de carte d'itinéraire générée à l'aide d'un procédé et d'un système de génération de carte d'itinéraire selon l'invention dont les points d'entrée des représentations schématiques sont localisés dans une même zone pour chaque schéma ;
- la figure 11 présente un autre exemple de carte d'itinéraire générée à l'aide d'un procédé et d'un système de génération de carte d'itinéraire selon l'invention dans lequel des manoeuvres ont été regroupées ;
- la figure 12 présente un autre exemple de carte d'itinéraire générée à l'aide d'un procédé et d'un système de génération de carte d'itinéraire selon l'invention dans lequel le sens de lecture est du bas vers le haut du support.

### DESCRIPTION DETAILLEE DE L'INVENTION

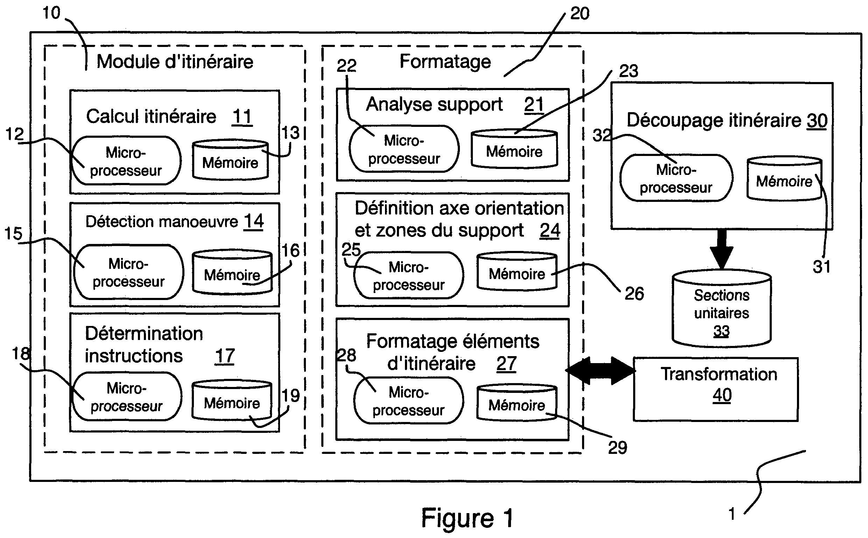

La figure 1 présente un exemple d'un mode de réalisation d'un système 1 de génération de carte d'itinéraire. On retrouve d'une part un module d'itinéraire 10, prévu pour générer toutes les données en relation avec l'itinéraire pour lequel une carte doit être produite. Le module d'itinéraire 10 comporte un module de calcul d'itinéraire 11, pourvu de moyens de calculs tel qu'un microprocesseur 12 et d'une mémoire de travail 13, un module de détection de manoeuvre 14, pourvu de moyens de calculs tel qu'un microprocesseur 15 et d'une mémoire de travail 16, et d'un module de détermination d'instruction 17, pourvu de moyens de calculs tel qu'un microprocesseur 18 et d'une mémoire de travail 19. Selon diverses variantes, les moyens de calculs 12, 15 et 18, tout comme les mémoires de travail 13, 16 et 19 peuvent être centralisés pour tous les modules ou tout le système de génération de carte d'itinéraire, ou encore être agencés de façon externe, avec connexion aux différents modules.

Le module de calcul d'itinéraire 11 fonctionne de façon connue en soit, à l'aide d'un algorithme de détermination du plus court chemin entre deux points, tel que Dijkstra ou autre. Un tel algorithme permet, à l'aide d'un microprocesseur et des instructions requises, d'effectuer l'exploration d'un très grand nombre de possibilités, (de quelques dizaines ou centaines pour des zones à faibles densité et/ou pour des itinéraires courts à quelques centaines de milliers, voire plus, pour des zones à forte densité de routes et/ou pour des itinéraires longs) dans le but d'élire un itinéraire optimal en fonction de critères donnés, tels que l'itinéraire le plus court, ou le plus rapide, etc.

Une fois l'itinéraire connu, un module de détection de manoeuvre 14 permet de détecter les manoeuvres à effectuer le long de l'itinéraire en question. Par manoeuvre, on entend principalement un action de conduite d'un véhicule permettant de sélectionner un tronçon donné lorsque le conducteur se trouve face à une possibilité d'engager son véhicule vers une pluralité de tronçons (au moins deux). Le conducteur se trouve face à de multiples possibilités de poursuivre sa route, et une manoeuvre lui permet d'engager son véhicule en fonction de la direction prévue par l'itinéraire préétabli. Ainsi, le module 14 effectue un parcours virtuel de l'itinéraire établi par le module 11, et identifie les points ou noeuds où des tronçons multiples sont rattachés. Il peut s'agir d'intersection de routes, de sortie ou d'entrée sur autoroutes, et bifurcations, etc. Les manoeuvres sont déterminées de façon connues en soit. Pour un rond-point, il est entendu qu'une pluralité de manoeuvres simples sont en général impliquées, depuis l'entrée sur le rond-point, puis au passage de chaque sortie, impliquant à chaque fois une manoeuvre consistant soit à rester dans le rond-point, soit à en sortir, jusqu'à la sortie effective du rond-point. Dans le présent document, les ronds-points sont considérés comme une seule manoeuvre, du type « prendre la 3^{e} sortie », consistant en fait à une manoeuvre complexe, telle qu'évoquée précédemment.

Le module 17 de détermination d'instructions effectue les associations de données entre les manoeuvres d'une part, détectées par le module de détection de manoeuvre 14, et d'autre part, les données routières de l'itinéraires, de façon à définir des instructions sous forme de données écrites, permettant au conducteur de prendre connaissance des données usuelles telles que les noms ou numéros de route, les directions à suivre, les repères, les distances à parcourir, et des données relatives aux manoeuvres à effectuer, tel que tourner à gauche ou à droite, prendre la X^{e} sortie, continuer tout droit, etc.

Grâce aux modules de détection de manoeuvre 14 et de détermination d'instructions 17, on peut obtenir des couples de données, ou données appariées, avec d'une part, des données relatives à une manoeuvre à afficher sous forme d'un schéma, et d'autre part, des données relatives aux instructions écrites permettant d'effectuer la manoeuvre correspondante.

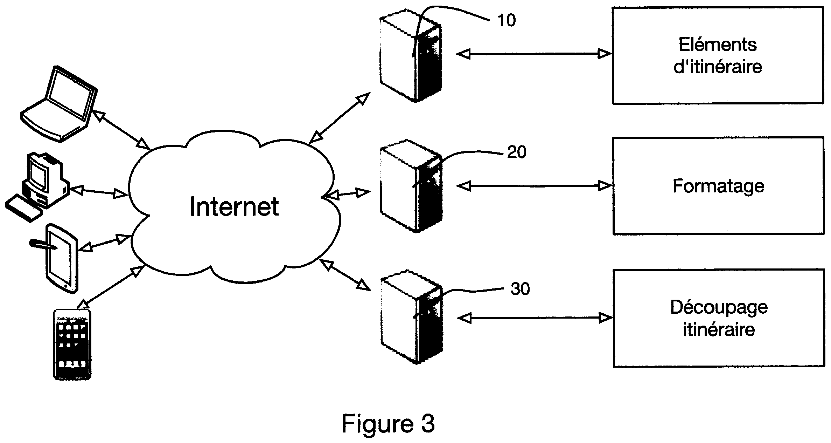

Le module 10 d'itinéraire peut être prévu de façon externe au système 1 de génération de carte d'itinéraire, soit à proximité l'un de l'autre, avec connexion directe, soit à distance l'un de l'autre, avec les moyens de connexion de type connus tels que Wifi, Wimax, par un réseau, tel qu'Internet ou un réseau de téléphonie cellulaire, etc. Selon une autre variante, tel que montré à la figure 3, un module d'itinéraire 10 peut être commun à une pluralité d'utilisateurs utilisant des dispositifs d'affichage à distance, de type portable, comme des téléphones dits « Smartphones », PDA, dispositifs de guidage de type GPS ou autre, ordinateurs portables ou de type tablette, etc, ou fixe, tel qu'un ordinateur de bureau.

Selon d'autres variantes, le module de calcul d'itinéraire 11, et/ou le module de détection de manoeuvre 14 et/ou le module de détermination d'instructions 17 sont séparés ou à distance, et reliés par des moyens de communications ou de connexion usuels, tel qu'évoqués précédemment. Selon encore une autre variante, les modules de calcul d'itinéraire 11, le module de détection de manoeuvre 14, et le module de détermination d'instructions 17 peuvent aussi être combinés en un seul ou deux modules.

Le bloc de formatage 20 comporte un module d'analyse de support 21, pourvu de moyens de calculs tel qu'un microprocesseur 22 et d'une mémoire de travail 23, un module de définition d'axe d'orientation et de zones support 24, pourvu de moyens de calculs tel qu'un microprocesseur 25 et d'une mémoire de travail 26, et d'un module de formatage d'éléments d'itinéraire 27, pourvu de moyens de calculs tel qu'un microprocesseur 28 et d'une mémoire de travail 29. Selon diverses variantes, les moyens de calcul 22, 25 et 28, tout comme les mémoires de travail 23, 26 et 29 peuvent être centralisés pour tous les modules ou tout le système de génération de carte d'itinéraire, ou encore être agencés de façon externe, avec connexion aux différents modules.

Le module d'analyse de support 21 détecte le type et les caractéristiques d'affichage du support prévu pour affichage de la carte d'itinéraire, afin que le format de la carte d'itinéraire puisse être adapté. En fonction des données recueillies par le module d'analyse de support 21, le module de définition d'axe d'orientation et de zones du support 24 définit tout d'abord un axe d'orientation A-A, servant à définir une direction préférentielle d'orientation sur le support, selon laquelle les différentes manoeuvres de l'itinéraire seront agencées ou alignées. L'axe d'orientation permet de séparer deux zones 400 et 500 disposées côte à côte l'une de l'autre. Ces deux zones sont prévues pour contenir les éléments d'itinéraires appariés : d'un côté, les instructions écrites, et de l'autre, les manoeuvres correspondantes. Le module de formatage d'éléments d'itinéraires 27 effectue le formatage des éléments d'itinéraires appariés, dans un format adapté au support utilisé et en fonction de l'axe d'orientation défini.

Le module 20 de formatage peut être prévu de façon externe au système 1 de génération de carte d'itinéraire, soit à proximité l'un de l'autre, avec connexion directe, soit à distance l'un de l'autre, avec les moyens de connexion de type connus tels que Wifi, Wimax, par un réseau, tel qu'Internet ou un réseau de téléphonie cellulaire, etc. Selon une autre variante, tel que montré à la figure 3, un module de formatage 20 peut être commun à une pluralité d'utilisateurs utilisant des dispositifs d'affichage à distance, de type portable, comme des téléphones dits « Smartphones », PDA, dispositifs de guidage de type GPS ou autre, ordinateurs portables ou de type tablette, etc, ou fixe, tel qu'un ordinateur de bureau.

Un module de découpage d'itinéraire 30 effectue une séparation de l'itinéraire à afficher en une pluralité de sections unitaires 510. Le mode et les critères de séparation sont présentés plus en détails plus loin dans ce document. Les sections unitaires générées sont stockées dans une mémoire ou unité de stockage de sections unitaires 33.

Le module 30 de découpage d'itinéraire peut être prévu de façon externe au système 1 de génération de carte d'itinéraire, soit à proximité l'un de l'autre, avec connexion directe, soit à distance l'un de l'autre, avec les moyens de connexion de type connus tels que Wifi, Wimax, par un réseau, tel qu'Internet ou un réseau de téléphonie cellulaire, etc. Selon une autre variante, tel que montré à la figure 3, un module de découpage d'itinéraire 30 peut être commun à une pluralité d'utilisateurs utilisant des dispositifs d'affichage à distance, de type portable, comme des téléphones dits « Smartphones », PDA, dispositifs de guidage de type GPS ou autre, ordinateurs portables ou de type tablette, etc, ou fixe, tel qu'un ordinateur de bureau.

Un module de transformation des tronçons 40, permettant de modifier les caractéristiques des tronçons en fonction du format d'affichage, est également prévu. Tel que décrit plus loin, ce module permet d'adapter diverses caractéristiques des tronçons, tels que la forme, la longueur, l'angle, etc, par rapport aux éléments adjacents, pour permettre de réduire la surface requise pour disposer la représentation schématique de la manoeuvre à effectuer de façon compacte, sans perte des données informatives requises pour assurer le suivi de l'itinéraire. Le fait que la manoeuvre affichée soit extraite de la carte routière, et que seulement quelques tronçons soient présentés plutôt qu'une carte classique, permet d'effectuer des modifications de formes sans affecter l'agencement général de la carte et sa lisibilité. Le module de transformation 40 des tronçons est avantageusement intégré ou relié au module de formatage d'éléments d'itinéraires 27.

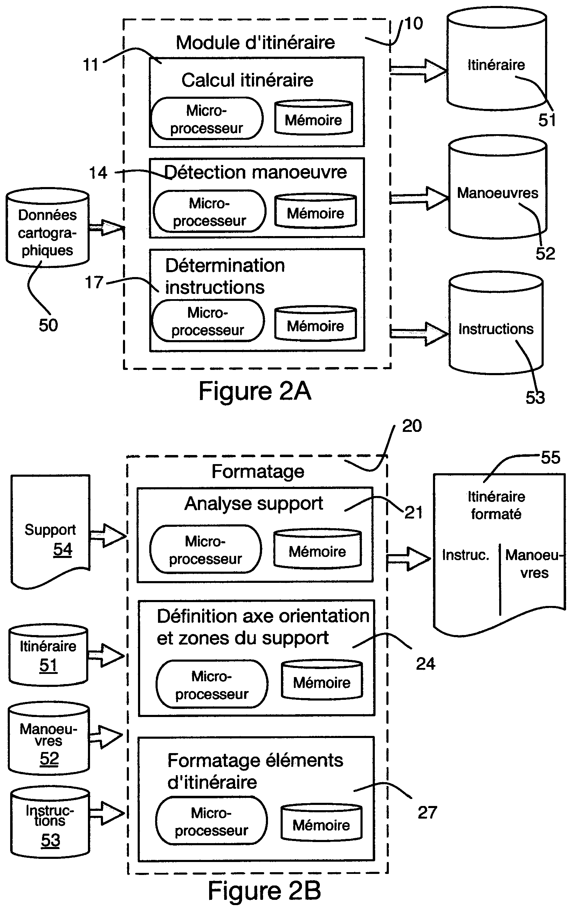

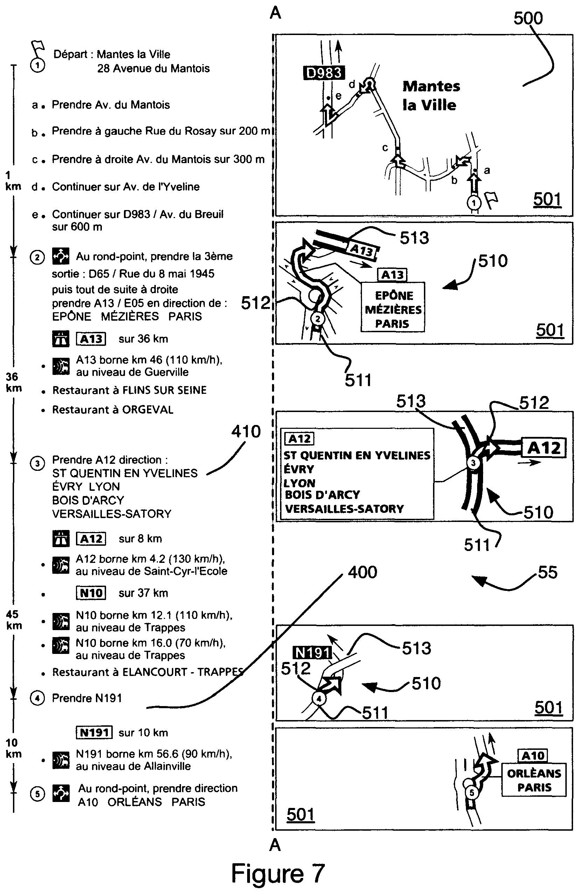

Les figures 2A et 2B illustrent de façon schématique les principales fonctions du module d'itinéraire 10 et du bloc de formatage 20. A la figure 2A, on remarque que les données cartographiques brutes 50 sont traitées par le module d'itinéraire 10 pour obtenir les données de l'itinéraire 51 à effectuer, les données des manoeuvres 52 correspondantes, et les données des instructions 53 associées à ces manoeuvres. A la figure 2B, on observe le bloc de formatage 20 qui, à partir des données 54 du support, de l'itinéraire 51, des manoeuvres 52 et des instructions 53, permet d'obtenir un itinéraire formaté 55 comportant d'une part, des instructions 410 et d'autre part, des représentations schématiques 501 de ces instructions, telles que présentées plus en détails en relation avec les figures 7 à 12.

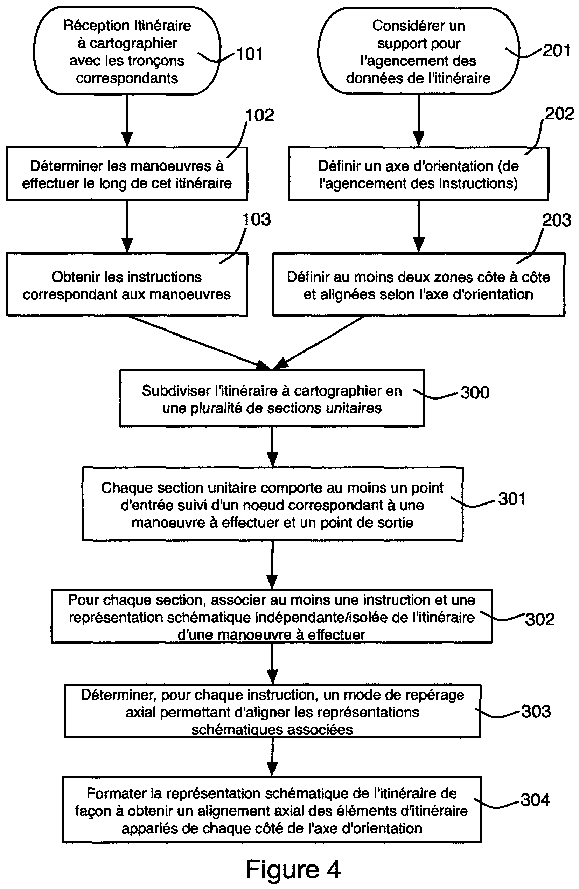

La figure 4 présente, de façon successive, les principales étapes du procédé selon l'invention. D'une part, aux étapes 101 à 103, les données 51 en relation avec l'itinéraire sont calculées. D'autre part, aux étapes 201 à 203, les données 54 concernant le type de support et ses caractéristiques dimensionnelles sont obtenues.

De façon plus détaillée, à l'étape 101, après réception par un module de calcul d'itinéraire 11 des données cartographiques digitales des tronçons et des noeuds permettant de reconstituer une représentation de l'itinéraire calculé, les manoeuvres à effectuer le long de l'itinéraire sont déterminées à l'étape 102 par un module de détermination de manoeuvre 14. Les instructions, notamment écrites, concernant les manoeuvres identifiées sont par ailleurs identifiées à l'étape 103 par un module de détermination d'instructions 17. On obtient ainsi des couples d'éléments d'itinéraires appariés, constitués d'une part, des instructions écrites permettant d'expliquer au conducteur les manoeuvres à effectuer tout au long de l'itinéraire, et d'autre part, des manoeuvres correspondantes, pour affichage sous forme schématique.

Les données en relation avec le meilleur chemin à parcourir pour constituer l'itinéraire entre les points de départ et d'arrivée peuvent être calculées préalablement à l'étape 101 par le module d'itinéraire 10 ou par tout autre dispositif ou système de détermination d'itinéraire. Selon une variante, elles peuvent être calculées par le module d'itinéraire 10 lors de l'étape 101.

Il en est de même pour les données relatives aux manoeuvres 52 et aux instructions 53, qui peuvent être obtenues préalablement à la mise en oeuvre du procédé, ou au cours des premières étapes de celui-ci.

Les données concernant le support utilisé 54 pour l'affichage de la carte d'itinéraire sont fournies au module d'analyse du support 21 pour effectuer une détection du type de support, comme par exemple papier pour impression, ou écran pour affichage à l'aide des pixels de l'écran, ou tout autre mode permettant d'afficher ou de montrer ou d'illustrer la carte d'itinéraire produite. Le module d'analyse du support 21 permet par ailleurs d'obtenir les dimensions du support prévu. Dans les cas où une communication bilatérale n'est pas possible avec le support, des valeurs par défaut peuvent être prises en compte, comme par exemple un format A4 pour un support par impression sur papier. Pour que les éléments d'itinéraires appariés puissent être agencés de façon optimale sur le support, une étape de définition d'un axe d'orientation du support est prévue, avantageusement à l'aide d'un module de définition d'axe d'orientation et de zones du support 24. Le module 24 prévoit l'axe d'orientation de préférence de façon à ce que ce dernier puisse servir à délimiter une zone de chaque côté de celui-ci. Les deux zones, 400 et 500 (figure 7 et suivantes) peuvent être de surfaces égales ou non, en fonction des paramètres prédéfinis ou en fonction de choix laissés à l'utilisateur, à l'aide de menus de formatage qui lui sont proposés.

Aux étapes 300 et 301, l'itinéraire à cartographier est découpé, par un module de découpage 30, en une pluralité de sections unitaires, qui sont stockées dans une mémoire 33 de sections unitaires. Le découpage est effectué de sorte que chaque section unitaire 510 comporte au moins un point d'entrée 511, suivi d'un noeud 512 correspondant à une manoeuvre à effectuer, et un point de sortie 513, comme on le voit aux figures 7 et suivantes.

A l'étape 302, on associe, pour chaque section, au moins une instruction et une représentation schématique isolée ou extraite de l'itinéraire de la manoeuvre correspondante à effectuer pour suivre l'itinéraire. La représentation schématique est extraite de l'itinéraire global à effectuer. L'extraction consiste à conserver au minimum les tronçons identifiés pour la réalisation de l'itinéraire. Les autres tronçons de la carte routière, le fond cartographique, les autres données ainsi que le format de la carte routière, ne sont de préférence pas représentés. Le fait de n'utiliser que les tronçons directement utiles plutôt qu'une représentation cartographique détaillée classique sur laquelle l'itinéraire est surligné confère une très grande souplesse pour configurer et formater la manoeuvre à afficher. En effet, il est possible de raccourcir un ou plusieurs tronçons, sans modifier la longueur d'autres tronçons voisins ou adjacents. Les changements de longueur peuvent être effectués sans tenir compte de contraintes d'échelles, de sorte que certains tronçons sont raccourcis plus ou moins que d'autres, tandis que d'autres tronçons peuvent même être allongés. Les modifications peuvent aussi impliquer des changements d'angles de certains tronçons, et même des changements de forme. Le fait que l'itinéraire soit isolé de la carte routière correspondante libère de la contrainte du respect des formes, des angles et des dimensions des tronçons.

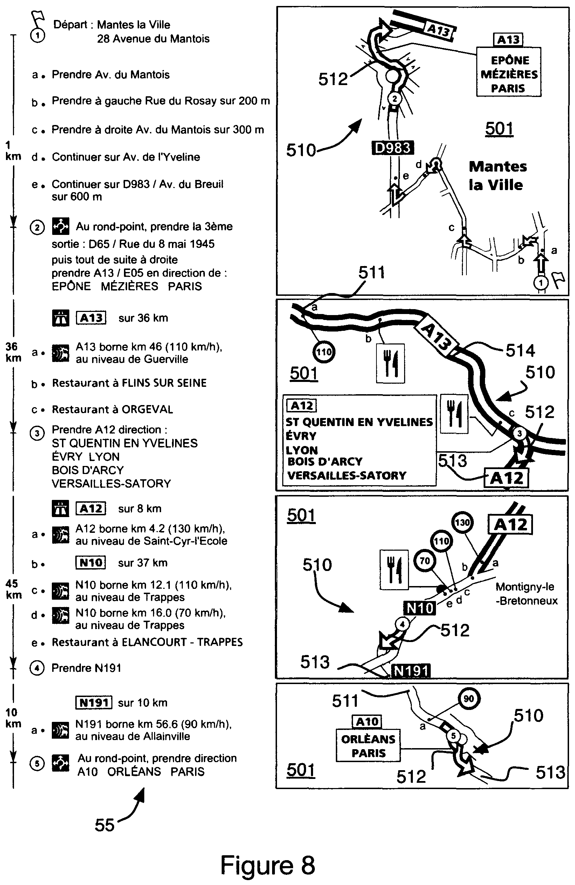

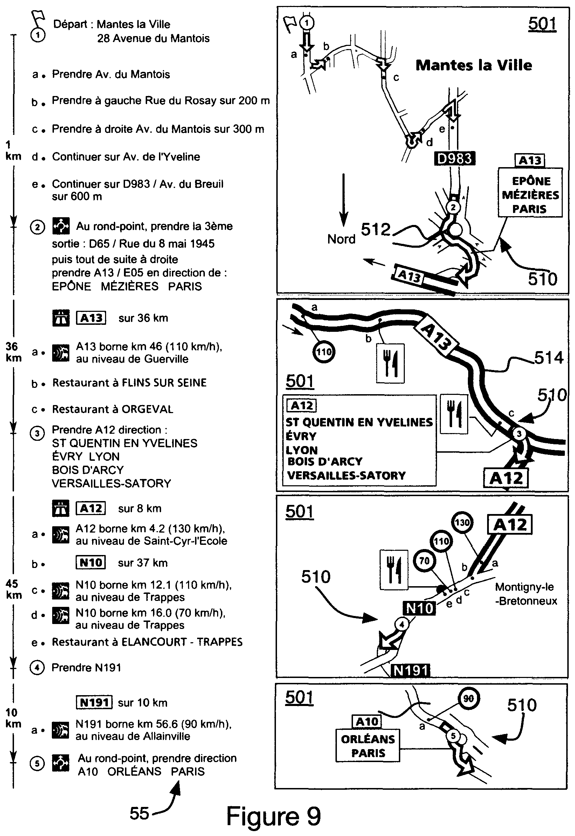

Dans une variante, le représentation schématique de la manoeuvre comporte en plus d'autres tronçons, par exemple des tronçons directement connectés à ceux de l'itinéraire prévu, ou des tronçons importants, susceptibles de servir de repères ou références pour faciliter le suivi de l'itinéraire. On représente aussi avantageusement les tronçons où des manoeuvres à venir sont prévues. Par ailleurs, pour faciliter le suivi de l'itinéraire, les sections unitaires peuvent comporter une portion d'itinéraire sans manoeuvre à effectuer 514 (figures 8 et 9), en aval et/ou en amont de la portion d'itinéraire de la manoeuvre elle-même. Ces portions sans manoeuvre peuvent être représentées jusqu'à la manoeuvre suivante.

Dans certains cas, comme par exemple pour des représentations à sensiblement grande échelle pour des zones résidentielles, des zones de rues sans nom ou avec des noms peu visibles depuis la route lorsque le véhicule effectuant l'itinéraire se déplace, une pluralité de sections unitaires sont combinées pour représentation sur un schéma unique. Ceci permet d'éviter de multiplier le nombre de schémas de manoeuvres. Par ailleurs, ce type de regroupement correspond souvent à des instructions écrites succinctes en série, du type « tourner à gauche sur la rue XXX, puis à droite sur la rue YYYY », etc. La figure 7, décrite en détails plus loin, présente un exemple d'une telle combinaison.

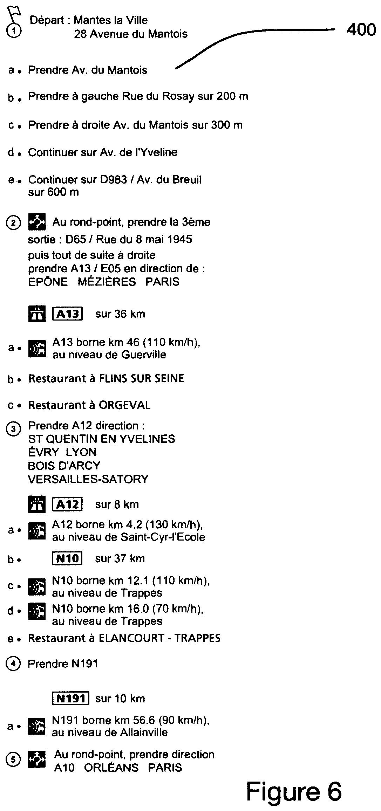

La carte de l'itinéraire est formatée de façon à agencer, dans l'ordre de réalisation prévu, les couples d'éléments d'itinéraire appariés, avec d'un côté 400 de l'axe d'orientation A-A, les instructions écrites 410, et de l'autre côté 500 de l'axe d'orientation A-A, les représentations schématiques des manoeuvres correspondantes. Les couples sont agencés de façon à ce que les éléments correspondants soient sensiblement alignés les uns avec les autres. Dans l'exemple de mise en oeuvre illustré à la figure 4, à l'étape 303, on détermine, pour chaque instruction, un mode de repérage axial permettant d'aligner les représentations schématiques associées. Pour ce faire, on peut par exemple évaluer ou mesurer l'espacement axial requis pour positionner les instructions de chacune des sections les unes après les autres d'un côté de l'axe d'orientation. On obtient ainsi une référence, qui permet d'ajuster ou d'adapter le format des diverses représentations schématiques des manoeuvres en fonction de l'espace disponible. La figure 6 montre un exemple d'un côté 400 tel qu'il serait affichable avant formatage du côté 500 qui sera établi en fonction de l'agencement axial du premier côté 400.

Ainsi, à l'étape 304, les représentations schématiques sont formatées, avec des longueurs, formes, et angles des différents tronçons permettant d'intégrer tous les tronçons dans l'espace attribué. On obtient une représentation adaptée, construite en fonction d'une utilisation optimale de la surface disponible. Un module de transformation 40 est avantageusement utilisé pour ces opérations de modifications de tronçons. Par ailleurs, les éléments d'itinéraire appariés, instructions d'un côté, et représentation schématique de l'autre, sont alignés pour former un agencement tel que les manoeuvres sont sensiblement en vis-à-vis des instructions correspondantes. Différentes variantes de formatage de cartes d'itinéraires seront présentées ultérieurement, à titre d'exemples non limitatifs, en relation avec les figures 7 à 12.

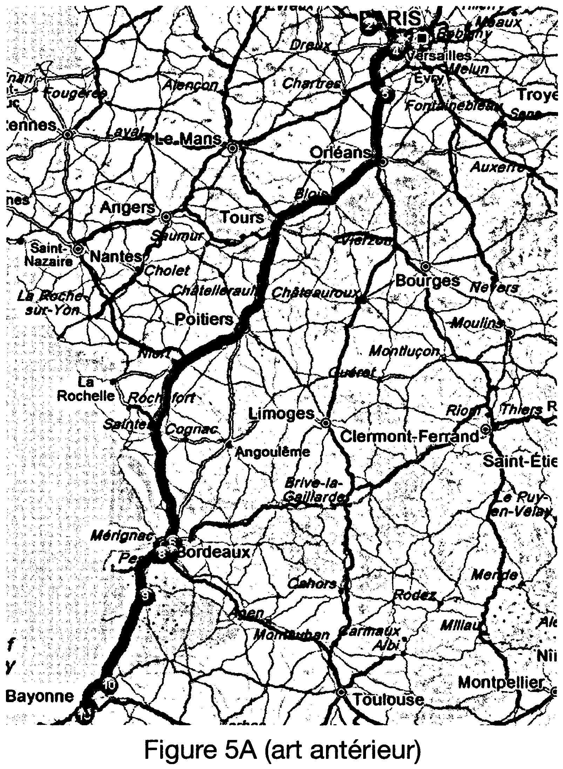

La figure 5A montre un exemple d'une carte d'itinéraire selon les techniques de calcul et d'affichage connues. On observe que l'itinéraire à parcourir est indiqué par un trait particulier appliqué sur la route de l'itinéraire. Ce trait est appliqué sur une carte routière classique, comportant tous les détails usuels tels que les noms de lieu, et parfois les numéros des routes principales. Une telle carte requiert en général une importante capacité mémoire et présente une ergonomie restreinte. Il est en effet souvent difficile de distinguer clairement le parcours choisi du reste des données affichées. Par ailleurs, du fait de l'utilisation d'une carte en format standardisé, il n'est pas possible d'effectuer des modifications de formes sans affecter les noeuds et tronçons se trouvant dans la zone environnante.

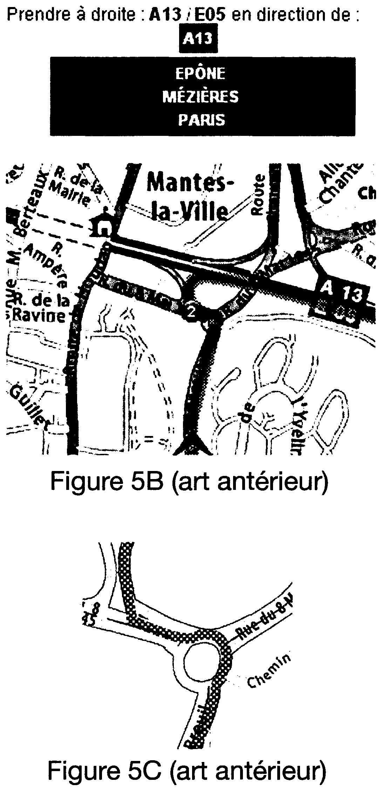

La figure 5B montre un exemple selon la technique antérieure d'affichage d'une manoeuvre avec les données textuelles correspondantes. Ici encore, l'utilisation nécessaire de l'ensemble de ce type de cartes détaillées implique la mise à disposition d'une importante capacité mémoire.

La figure 5C illustre un exemple d'affichage détaillé selon la technique antérieure d'une manoeuvre, par grossissement de la zone où la manoeuvre à effectuer se trouve.

La figure 7 présente un premier exemple de formatage obtenu grâce au procédé préalablement décrit. On y aperçoit un exemple de carte d'itinéraire 55 générée à l'aide du procédé et du système de génération de carte d'itinéraire selon l'invention. L'axe d'orientation A-A sert à délimiter les deux zones dans lesquelles les éléments d'itinéraire sont agencés : une première zone 400 pour les données d'instructions 410, de préférence en format écrit, et une seconde zone 500 pour les représentations schématiques 501 des manoeuvres correspondantes. Les instructions, tout comme les représentations schématiques des manoeuvres, sont agencées dans l'ordre chronologique d'exécution prévu, en suivant l'axe d'orientation A-A, dans cet exemple, du haut vers le bas du support, suivant le sens de lecture habituel. La direction de conduite du véhicule est cependant présentée dans le sens inverse, soit du bas vers le haut pour cet exemple. Tel que mentionné précédemment, une section unitaire 510 comporte un point d'entrée 511, un noeud 512 correspondant à une manoeuvre à effectuer, et un point de sortie 513. Pour les ronds-points ou pour certains carrefours, un noeud peut être complexe, c'est-à-dire comporter des possibilités multiples d'engagement sur différents tronçons.

Tel qu'évoqué précédemment, l'exemple de la figure 7 illustre comment des manoeuvres simples peuvent être combinées sur une même représentation schématique. Dans cet exemple, la première représentation schématique concerne un parcours d'à peine un km, tel que montré sur la portion gauche de la figure, à l'aide des flèches. S'agissant de manoeuvres simples, s'enchaînant sensiblement rapidement, un regroupement de ces manoeuvres permet de simplifier la représentation schématique et surtout d'éviter de multiplier les schémas pour un même secteur de parcours.

La figure illustre aussi le non respect des échelles cartographiques, d'un schéma à l'autre. Ainsi, sur des hauteurs de support sensiblement comparables, on montre dans un premier temps un parcours de un km, puis dans un second temps de 36 km, puis de 45 km. Cet exemple vise à fournir les éléments essentiels au conducteur pour effectuer l'itinéraire, sans pollution par des données non requises pour suivre le parcours.

Dans la variante de réalisation présentée à la figure 8, la direction de conduite du véhicule varie selon les manoeuvres. Dans cet exemple, les trois dernières représentations schématiques 501 sont présentées avec une direction de conduite vers le bas, tandis que la première représentation schématique 501 est formatée avec une direction de conduite vers le haut. Les sections unitaires 512 sont par ailleurs coupées après le point de sortie 513 de la manoeuvre. Par ailleurs, diverses données complémentaires à l'itinéraire, telles que des emplacements de restaurants et de radars sont par ailleurs fournies, d'une part dans la zone d'instruction 400 et d'autre part, avec un point correspondant à leur emplacement dans la zone correspondante de manoeuvre 500. Cette même figure montre par ailleurs une portion d'itinéraire sans manoeuvre 514, qui peut être adjointe à la représentation schématique, pour faciliter la compréhension générale de l'itinéraire.

Dans la variante présentée à la figure 9, les représentations schématiques 501 comportent des directions de circulation du véhicule dans le même sens que le sens de lecture des données d'instructions 410, soit du haut vers le bas.

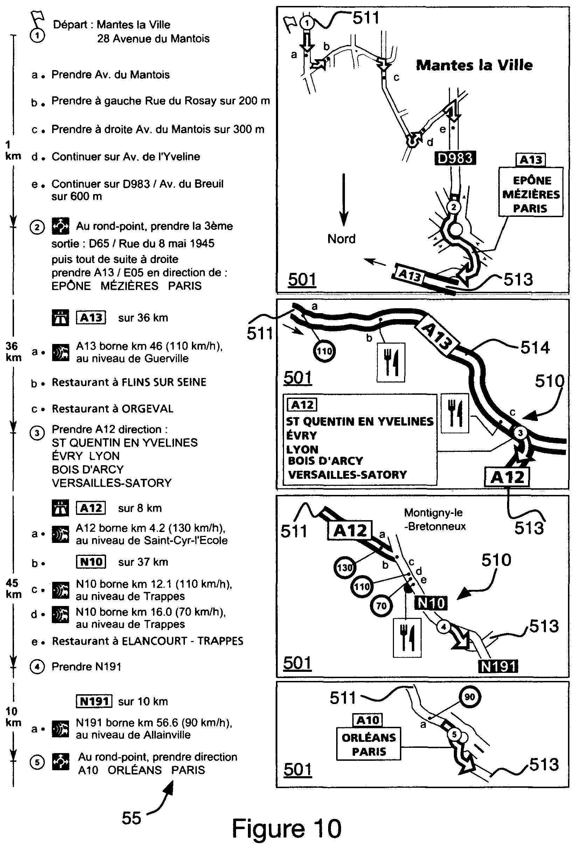

Dans la variante présentée à la figure 10, pour chaque représentation schématique 501, le point d'entrée 511 se situe sensiblement dans le même secteur, dans cet exemple, le coin supérieur gauche. La point de sortie 513 se situe aussi avantageusement dans le même secteur, dans cet exemple, le coin opposé, soit le coin inférieur droit. Une telle configuration schématique standardisée permet d'améliorer l'ergonomie et facilite la lecture et la compréhension des manoeuvres à effectuer pour suivre l'itinéraire sans faille.

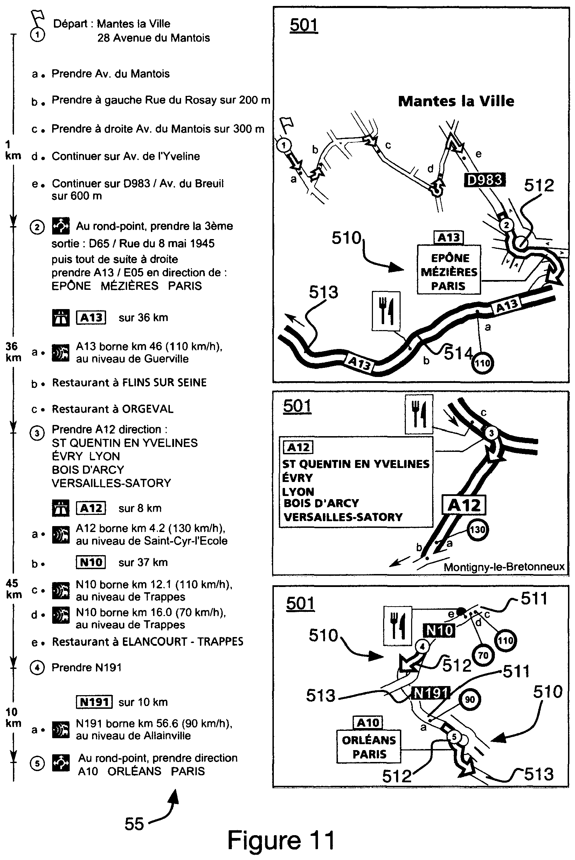

Dans l'exemple de la figure 11, une portion d'itinéraire 514 sans manoeuvre est prévue après une manoeuvre, dans la première représentation schématique 501. La troisième représentation schématique 501 comporte plusieurs sections unitaires, jointes sur un même schéma.

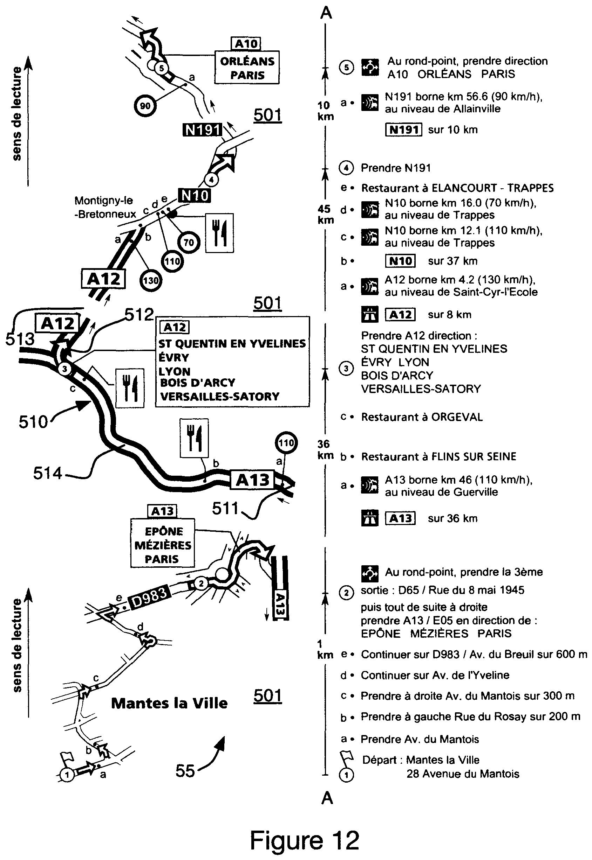

Dans l'exemple illustré à la figure 12 le sens de lecture est prévu de bas en haut du support, de façon à correspondre à une représentation de l'itinéraire avec la route devant le véhicule. Une telle représentation est très réaliste et instinctive et donc facile à interpréter, même avec un minimum de données. Par ailleurs, un tel type d'agencement correspond à un mode de plus en plus répandu, à savoir la représentation cartographique utilisée pour les dispositifs de guidage mobile de type GPS.

Dans les exemples des figures 7 à 12, les distances entre les manoeuvres sont indiquées à l'aide de flèches en liaison avec les représentations schématiques 501. Aux figures 7 à 11, ces distances sont indiquées par des flèches comportant des indications du nombre de km à parcourir entre deux manoeuvres. A la figure 12, ces distances sont directement positionnées le long de l'axe d'orientation A-A. Egalement dans les exemples des figures 8 à 12, en plus des instructions écrites correspondant aux manoeuvres, quelques données informatives, comme par exemple des données touristiques, les emplacements de certains radars, les postes d'essence, etc, peuvent aussi être prévues, à des fins de commodité pour le conducteur et/ou les passagers.

Les Figures et leurs descriptions faites ci-dessus illustrent l'invention plutôt qu'elles ne la limitent. En particulier, l'invention et ses différentes variantes viennent d'être décrites en relation avec un exemple particulier de format comportant un axe d'orientation dans le sens vertical du support.

Néanmoins, il est évident pour un homme du métier qu'il est également possible de prévoir un axe d'orientation selon une autre orientation, par exemple transversale ou diagonale.

Les signes de références dans les revendications n'ont aucun caractère limitatif. Les verbes « comprendre » et « comporter » n'excluent pas la présence d'autres éléments que ceux listés dans les revendications. Le mot « un » précédant un élément n'exclut pas la présence d'une pluralité de tels éléments.

## Revendications

1. Procédé de génération automatique de cartes d'itinéraires pour système de génération de cartes d'itinéraires ayant un accès à des données de cartographie routière digitales en relation avec au moins une zone géographique donnée et permettant de déterminer une pluralité de cartes d'itinéraires dans cette zone, comportant les étapes consistant à :
• recevoir un itinéraire à cartographier (101) comportant une pluralité de tronçons ;
• détecter, à l'aide d'un module de détection de manoeuvre (14), les manoeuvres permettant d'effectuer l'itinéraire (102), chaque manoeuvre correspondant à une action de conduite d'un véhicule permettant de sélectionner un tronçon donné lorsque le conducteur se trouve face à une possibilité d'engager son véhicule vers une pluralité de tronçons ;
• obtenir, à l'aide d'un module de détermination d'instructions (17), des données d'instructions écrites correspondant aux manoeuvres à effectuer (103) ;
• effectuer une extraction des représentations schématiques pour chaque manoeuvre;
• apparier les instructions écrites et les représentations schématiques correspondantes ;
• à l'aide d'un module de découpage d'itinéraire (30), découper l'itinéraire à cartographier en une pluralité de sections unitaires (300), chaque section unitaire comportant un point d'entrée suivi d'un noeud correspondant à une manoeuvre à effectuer associée à une instruction écrite et une représentation schématique appariées et un point de sortie ;
• effectuer un formatage des données de l'itinéraire pour un agencement sur un support comportant les étapes consistant à :
• définir, à l'aide d'un module de définition d'axe d'orientation et de zones du support (24), un axe d'orientation (A-A) permettant de séparer deux zones (400, 500) disposées côte à côte l'une de l'autre, ces deux zones étant prévues pour contenir les éléments d'itinéraires appariés : d'un côté, les instructions écrites, et de l'autre, les manoeuvres correspondantes ;
• pour chaque section unitaire, formater (304), à l'aide d'un module de formatage d'éléments d'itinéraires (27), la représentation schématique de façon à ce que des caractéristiques d'agencement des tronçons permettent d'obtenir une représentation schématique adaptée à la surface de la zone du support prévue pour disposer ladite représentation schématique, ladite représentation schématique adaptée étant construite en fonction d'une utilisation optimale de la surface disponible tout en permettant d'aligner les éléments d'itinéraire appariés de chaque côté de l'axe d'orientation ;
• aligner les instructions écrites et les représentations schématiques appariées de part et d'autre de l'axe d'orientation. **caractérisée en ce que** la première zone (400) contient en même temps un ensemble d'instructions écrites, et la deuxième zone (500) contient en même temps un ensemble de représentations schématiques (501) et **en ce que** lesdites deux zones (400, 500) sont disposées de part et d'autre de l'axe d'orientation (A-A).

2. Procédé de génération automatique de cartes d'itinéraires selon la revendication 1, dans lequel l'axe d'orientation (A-A) est orienté verticalement.

3. Procédé de génération automatique de cartes d'itinéraires selon l'une des revendications 1 ou 2, dans lequel le formatage de la représentation schématique comporte une étape de transformation permettant de modifier au moins une des caractéristiques d'agencement d'au moins une partie des tronçons en fonction d'une part des positions axiales des instructions écrites (410) et d'autre part de la surface disponible pour la représentation schématique.

4. Procédé de génération automatique de cartes d'itinéraires selon la revendication 3, dans lequel les caractéristiques d'agencement des tronçons comprennent :
- les angles de positionnement des tronçons les uns par rapport aux autres ;
- les profils des tronçons ;
- les longueurs relatives des tronçons.

5. Procédé de génération automatique de cartes d'itinéraires selon l'une des revendications précédentes, comprenant par ailleurs une étape d'agencement des tronçons de l'itinéraire de façon à procurer à la représentation schématique de l'itinéraire une orientation sensiblement selon l'axe d'orientation.

6. Procédé de génération automatique de cartes d'itinéraires selon l'une des revendications précédentes, dans lequel l'ensemble des points d'entrée et/ou de sortie comportent des positions angulaires voisines.

7. Procédé de génération automatique de cartes d'itinéraires selon l'une des revendications précédentes, dans lequel les noeuds des ronds-points sont regroupés pour ne former qu'une seule manoeuvre, de sorte que dans les ronds-points, aucun découpage n'est effectué avant la sortie.

8. Système de génération de cartes d'itinéraires pour la mise en oeuvre du procédé selon l'une des revendications 1 à 7, comportant un accès à des données de cartographie routière (50) en relation avec au moins une zone géographique donnée et permettant de déterminer une pluralité de cartes d'itinéraires comportant une pluralité de tronçons dans cette zone, au moins un microprocesseur et au moins une mémoire de travail, un module de calcul d'itinéraire (11), et comportant par ailleurs :
• un module de détection de manoeuvre (14), pour détecter les manoeuvres à effectuer pour parcourir l'itinéraire (102) ;
• un module de déterminations d'instructions (17), pour fournir des instructions écrites correspondant à chacune des manoeuvres (103) ;
• un module de définition d'axe d'orientation et de zones du support (24), pour définir un axe d'orientation (A-A) permettant de séparer deux zones (400, 500) disposées côte à côte l'une de l'autre, ces deux zones étant prévues pour contenir les éléments d'itinéraires appariés : d'un côté, les instructions écrites, et de l'autre, les manoeuvres correspondantes, chaque manoeuvre correspondant à une action de conduite d'un véhicule permettant de sélectionner un tronçon donné lorsque le conducteur se trouve face à une possibilité d'engager son véhicule vers une pluralité de tronçons ;
• un module de découpage d'itinéraire (30), pour découper l'itinéraire à cartographier en une pluralité de sections unitaires ;
• un module de formatage d'éléments d'itinéraires (27), pour formater la représentation schématique de façon à ce que des caractéristiques d'agencement desdits tronçons permettent d'obtenir une représentation schématique adaptée à la surface de la zone du support prévue pour disposer ladite représentation schématique, ladite représentation schématique adaptée étant construite en fonction d'une utilisation optimale de la surface disponible tout en permettant d'aligner les éléments d'itinéraire appariés de chaque côté de l'axe d'orientation, **caractérisé en ce que** la première zone (400) contient en même temps un ensemble d'instructions écrites et la deuxième zone (500) contient en même temps un ensemble de représentations schématiques (501), et **en ce que** lesdites deux zones (400, 500) sont disposées de part et d'autre de l'axe d'orientation (A-A).

9. Système de génération de cartes d'itinéraires selon la revendication 8, comprenant par ailleurs un module d'analyse (21) du support d'affichage de carte, pour déterminer la surface disponible pour afficher la carte d'itinéraire.

10. Système de génération de cartes d'itinéraires selon l'une des revendications 8 ou 9, comprenant par ailleurs un module de transformation des tronçons (40), permettant de modifier au moins une des caractéristiques d'agencement d'au moins une partie des tronçons en fonction d'une part, des positions axiales des instructions (410) et d'autre part, de la surface disponible pour la représentation schématique des tronçons.

## Patentansprüche

1. Verfahren zur automatischen Erstellung von Streckenkarten für ein System zur Erstellung von Streckenkarten, das einen Zugang zu digitalen Straßenkartografiedaten hat, die mit mindestens einem gegebenen geografischen Bereich in Beziehung stehen, und erlaubt, mehrere Streckenkarten in diesem Bereich zu bestimmen, umfassend die Schritte, die aus Folgendem bestehen:
• Empfangen einer zu kartografierenden Strecke (101), umfassend mehrere Abschnitte;
• Erkennen, mithilfe eines Manövererkennungmoduls (14), der Manöver, die erlauben, die Strecke (102) auszuführen, wobei jedes Manöver einer Fahraktion eines Fahrzeugs entspricht, die erlaubt, einen gegebenen Abschnitt auszuwählen, wenn der Fahrer einer Möglichkeit gegenübersteht, sein Fahrzeug hin zu mehreren Abschnitten zu bewegen;
• Erhalten, mithilfe eines Moduls zur Bestimmung von Anweisungen (17), der schriftlichen Anweisungsdaten, die den auszuführenden Manövern (103) entsprechen;
• Ausführen einer Extraktion der schematischen Darstellungen für jedes Manöver;
• paarweises Verknüpfen der schriftlichen Anweisungen und der entsprechenden schematischen Darstellungen;
• Aufteilen der zu kartografierenden Strecke in mehrere Einzelabschnitte (300) mithilfe eines Streckenaufteilungsmoduls (30), wobei jeder Einzelabschnitt einen Eintrittspunkt, gefolgt von einem Knoten, der einem auszuführenden Manöver entspricht, das mit einer schriftlichen Anweisung und einer schematischen Darstellung, die paarweise verknüpft sind, verbunden ist, und einen Austrittspunkt umfasst;
• Ausführen einer Formatierung der Streckendaten für eine Anordnung auf einem Träger, umfassend die Schritte, die aus Folgendem bestehen:
• Definieren, mithilfe eines Moduls zur Definition einer Ausrichtungsachse und von Trägerbereichen (24), einer Ausrichtungsachse (A-A), die erlaubt, zwei Bereiche (400, 500) zu trennen, die nebeneinander angeordnet sind, wobei diese zwei Bereiche vorgesehen sind, die paarweise verbundenen Streckenelemente zu enthalten: auf einer Seite die schriftlichen Anweisungen und auf der anderen die entsprechenden Manöver;
• Formatieren (304) der schematischen Darstellung für jeden Einzelabschnitt mithilfe eines Moduls zur Formatierung von Streckenelementen (27), so dass die Anordnungsmerkmale der Abschnitte erlauben, eine schematische Darstellung zu erhalten, die an die Fläche des Trägerbereichs, die vorgesehen ist, die schematische Darstellung anzuordnen, angepasst ist, wobei die angepasste schematische Darstellung je nach einer optimalen Nutzung der verfügbaren Fläche aufgebaut ist, wobei gleichzeitig erlaubt wird, die paarweise verknüpften Streckenelemente auf jeder Seite der Ausrichtungsachse auszurichten;
• Ausrichten der schriftlichen Anweisungen und der schematischen Darstellungen, die paarweise verknüpft sind, beiderseits der Ausrichtungsachse,
**dadurch gekennzeichnet, dass** der erste Bereich (400) gleichzeitig eine Anordnung schriftlicher Anweisungen enthält und der zweite Bereich (500) gleichzeitig eine Anordnung schematischer Darstellungen (501) enthält, und dadurch, dass die zwei Bereiche (400, 500) beiderseits der Ausrichtungsachse (A-A) angeordnet sind.

2. Verfahren zur automatischen Erstellung von Streckenkarten nach Anspruch 1, wobei die Ausrichtungsachse (A-A) vertikal ausgerichtet ist.

3. Verfahren zur automatischen Erstellung von Streckenkarten nach einem der Ansprüche 1 oder 2, wobei das Formatieren der schematischen Darstellung einen Umwandlungsschritt umfasst, der erlaubt, mindestens eins der Anordnungsmerkmale mindestens eines Teils der Abschnitte in Abhängigkeit von den axialen Positionen der schriftlichen Anweisungen (410) einerseits und der verfügbaren Fläche für die schematische Darstellung andererseits zu ändern.

4. Verfahren zur automatischen Erstellung von Streckenkarten nach Anspruch 3, wobei die Anordnungsmerkmale der Abschnitte Folgendes umfassen:
- die Positionierungswinkel der Abschnitte zueinander;
- die Profile der Abschnitte;
- die relativen Längen der Abschnitte.

5. Verfahren zur automatischen Erstellung von Streckenkarten nach einem der vorhergehenden Ansprüche, ferner umfassend einen Schritt des Anordnens der Abschnitte der Strecke, um der schematischen Darstellung der Strecke eine Ausrichtung zu geben, die im Wesentlichen entlang der Ausrichtungsachse verläuft.

6. Verfahren zur automatischen Erstellung von Streckenkarten nach einem der vorhergehenden Ansprüche, wobei die Anordnung von Eintritts- und/oder Austrittspunkten benachbarte Winkelpositionen umfasst.

7. Verfahren zur automatischen Erstellung von Streckenkarten nach einem der vorhergehenden Ansprüche, wobei die Knoten der Kreisverkehre gruppiert sind, um nur ein einzelnes Manöver zu bilden, so dass in Kreisverkehren vor dem Austritt kein Aufteilen erfolgt.

8. System zur Erstellung von Streckenkarten zur Umsetzung des Verfahrens nach einem der Ansprüche 1 bis 7, das einen Zugang zu Straßenkartografiedaten (50), die mit mindestens einem gegebenen geografischen Bereich in Beziehung stehen, umfasst und erlaubt, mehrere Streckenkarten in diesem Bereich, die mehrere Abschnitte umfassen, mindestens einen Mikroprozessor und mindestens einen Arbeitsspeicher, ein Streckenberechnungsmodul (11) zu bestimmen, und ferner umfassend:
• ein Manövererkennungsmodul (14), um die Manöver zu erkennen, die auszuführen sind, um die Strecke (102) zurückzulegen;
• ein Anweisungsbestimmungsmodul (17), um schriftliche Anweisungen zu liefern, die dem jeweiligen Manöver (103) entsprechen;
• ein Modul zur Definition einer Ausrichtungsachse und von Trägerbereichen (24), um eine Ausrichtungsachse (A-A) zu definieren, die erlaubt, zwei Bereiche (400, 500) zu trennen, die nebeneinander angeordnet sind, wobei diese zwei Bereiche vorgesehen sind, paarweise verbundene Streckenelemente zu enthalten: auf einer Seite die schriftlichen Anweisungen und auf der anderen die entsprechenden Manöver, wobei jedes Manöver einer Fahraktion eines Fahrzeugs entspricht, die erlaubt, einen gegebenen Abschnitt auszuwählen, wenn der Fahrer einer Möglichkeit gegenübersteht, sein Fahrzeug hin zu mehreren Abschnitten zu bewegen;
• ein Streckenaufteilungsmodul (30) zum Aufteilen der zu kartografierenden Strecke in mehrere Einzelabschnitte;
• ein Modul zur Formatierung von Streckenelementen (27), um die schematische Darstellung zu formatieren, so dass die Anordnungsmerkmale der Abschnitte erlauben, eine schematische Darstellung zu erhalten, die an die Fläche des Trägerbereichs, die vorgesehen ist, die schematische Darstellung anzuordnen, angepasst ist, wobei die angepasste schematische Darstellung je nach einer optimalen Nutzung der verfügbaren Fläche aufgebaut ist, wobei gleichzeitig erlaubt wird, die paarweise verknüpften Streckenelemente auf jeder Seite der Ausrichtungsachse auszurichten,
**dadurch gekennzeichnet, dass** der erste Bereich (400) gleichzeitig eine Anordnung schriftlicher Anweisungen enthält und der zweite Bereich (500) gleichzeitig eine Anordnung schematischer Darstellungen (501) enthält, und dadurch, dass die zwei Bereiche (400, 500) beiderseits der Ausrichtungsachse (A-A) angeordnet sind.

9. System zur Erstellung von Streckenkarten nach Anspruch 8, ferner umfassend ein Modul zur Analyse (21) des Kartenanzeigeträgers, um die Fläche zu bestimmen, die verfügbar ist, um die Streckenkarte anzuzeigen.

10. System zur Erstellung von Streckenkarten nach einem der Ansprüche 8 oder 9, ferner umfassend ein Modul zur Umwandlung der Abschnitte (40), das erlaubt, mindestens eines der Anordnungsmerkmale mindestens eines Teils der Abschnitte in Abhängigkeit von den axialen Positionen der Anweisungen (410) einerseits und der verfügbaren Fläche für die schematische Darstellung der Abschnitte andererseits zu ändern.

## Claims

1. Method for automatically generating route maps for system for generating route maps having access to digital road mapping data in conjunction with at least one given geographical zone and making it possible to determine a plurality of maps of routes in this zone, comprising the steps consisting in:
• receiving a route to be mapped (101) comprising a plurality of legs;
• detecting, with the aid of a manoeuvre detection module (14), the manoeuvres making it possible to perform the route (102), each manoeuvre corresponding to an action of driving a vehicle making it possible to select a given leg when the driver is faced with a possibility of committing his vehicle to a plurality of legs;
• obtaining, with the aid of a module for determining instructions (17), data of written instructions corresponding to the manoeuvres to be performed (103);
• performing an extraction of the schematic representations for each manoeuvre;
• pairing the written instructions and the corresponding schematic representations;
• with the aid of a route splitting module (30), splitting the route to be mapped into a plurality of unit sections (300), each unit section comprising an entry point followed by a node corresponding to a manoeuvre to be performed associated with a paired written instruction and a paired schematic representation and an exit point;
• performing a formatting of the data of the route for arrangement on a support comprising the steps consisting in:
• defining, with the aid of a module for defining axis of orientation and zones of the support (24), an orientation axis (A-A) making it possible to separate two zones (400, 500) disposed side by side one another, these two zone being designed to contain the paired route elements: on one side, the written instruction, and on the other, the corresponding manoeuvres;
• for each unit section, formatting (304), with the aid of a module for formatting route elements (27), the schematic representation in such a way that characteristics of arrangement of the legs make it possible to obtain a schematic representation suited to the area of the zone of the support that is designed to accommodate the said schematic representation, the said adapted schematic representation being constructed as a function of an optimal use of the available area while making it possible to align the paired route elements on each side of the orientation axis;
• aligning the written instructions and the paired schematic representations on either side of the orientation axis,
**characterized in that** the first zone (400) contains at the same time a set of written instructions, and the second zone (500) contains at the same time a set of schematic representations (501) and **in that** the said two zones (400, 500) are accommodated on either side of the orientation axis (A-A).

2. Method for automatically generating route maps according to Claim 1, in which the orientation axis (A-A) is oriented vertically.

3. Method for automatically generating route maps according to either of Claims 1 and 2, in which the formatting of the schematic representation comprises a transformation step making it possible to modify at least one of the characteristics of arrangement of at least part of the legs as a function, on the one hand, of the axial positions of the written instructions (410) and, on the other hand, of the area available for the schematic representation.

4. Method for automatically generating route maps according to Claim 3, in which the characteristics of arrangement of the legs comprise:
- the angles of positioning of the legs with respect to one another;
- the profiles of the legs;
- the relative lengths of the legs.

5. Method for automatically generating route maps according to one of the preceding claims, moreover comprising a step of arranging the legs of the route so as to afford the schematic representation of the route an orientation substantially along the orientation axis.

6. Method for automatically generating route maps according to one of the preceding claims, in which the set of the entry and/or exit points comprises neighbouring angular positions.

7. Method for automatically generating route maps according to one of the preceding claims, in which the nodes of roundabouts are grouped together to form just a single manoeuvre, so that, in roundabouts, no splitting is performed before the exit.

8. System for generating route maps for the implementation of the method according to one of Claims 1 to 7, comprising access to road mapping data (50) in conjunction with at least one given geographical zone and making it possible to determine a plurality of maps of routes comprising a plurality of legs in this zone, at least one microprocessor and at least one work memory, a route calculation module (11), and comprising moreover:
• a manoeuvre detection module (14), for detecting the manoeuvres to be performed to travel the route (102);
• an instructions determination module (17), for providing written instructions corresponding to each of the manoeuvres (103);
• a module for defining axis of orientation and zones of the support (24), for defining an orientation axis (A-A) making it possible to separate two zones (400, 500) disposed side by side one another, these two zones being designed to contain the paired route elements: on one side, the written instructions, and on the other, the corresponding manoeuvres, each manoeuvre corresponding to an action of driving a vehicle making it possible to select a given leg when the driver is faced with a possibility of committing his vehicle to a plurality of legs;
• a route splitting module (30), for splitting the route to be mapped into a plurality of unit sections;
• a module for formatting route elements (27), for formatting the schematic representation in such a way that characteristics of arrangement of the said legs make it possible to obtain a schematic representation suited to the area of the zone of the support that is designed to accommodate the said schematic representation, the said adapted schematic representation being constructed as a function of an optimal use of the available area while making it possible to align the paired route elements on each side of the orientation axis,
**characterized in that** the first zone (400) contains at the same time a set of written instructions, and the second zone (500) contains at the same time a set of schematic representations (501) and **in that** the said two zones (400, 500) are accommodated on either side of the orientation axis (A-A).

9. System for generating route maps according to Claim 8, moreover comprising an analysis module (21) for analysing the map display support, to determine the area available to display the route map.

10. System for generating route maps according to either of Claims 8 and 9, moreover comprising a module for transforming the legs (40), making it possible to modify at least one of the characteristics of arrangement of at least part of the legs as a function, on the one hand, of the axial positions of the instructions (410) and, on the other hand, of the area available for the schematic representation of the legs.
